(19) **Europäisches Patentamt**

**European Patent Office**

**Office européen des brevets**

(11) **EP 1 013 003 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(21) Anmeldenummer: **98928071.4**

(22) Anmeldetag: **25.03.1998**

(51) Int Cl.7: **H04B 7/08**, H04B 7/005

(86) Internationale Anmeldenummer:
**PCT/DE98/00877**

(87) Internationale Veröffentlichungsnummer:
**WO 98/043459 (01.10.1998 Gazette 1998/39)**

(54) **VERFAHREN ZUM KANALSCHÄTZEN AUS ÜBER EINEN FUNKKANAL ÜBERTRAGENEN EMPFANGSSIGNALEN**

METHOD FOR CHANNEL EVALUATION USING RECEIVE SIGNALS TRANSMITTED VIA A RADIO CHANNEL

PROCEDE D'EVALUATION DE CANAL A PARTIR DE SIGNAUX DE RECEPTION TRANSMIS VIA UN CANAL RADIO

(84) Benannte Vertragsstaaten:
**DE ES FI IT NL**

(30) Priorität: **25.03.1997 DE 19712501**

(43) Veröffentlichungstag der Anmeldung:
**28.06.2000 Patentblatt 2000/26**

(73) Patentinhaber: **SIEMENS AKTIENGESELLSCHAFT**
**80333 München (DE)**

(72) Erfinder:
• **BAIER, Paul, Walter**
**D-67661 Kaiserslautern (DE)**
• **BLANZ, Josef**
**D-66862 Kindsbach (DE)**
• **HAARDT, Martin**
**D-81477 München (DE)**
• **PAPATHANASSIOU, Apostolos**
**GR-171 21 Nea Smyrni/Athen (GR)**

(56) Entgegenhaltungen:
**DE-A- 4 201 439       US-A- 5 299 148**

• **JIAN-GUO WANG ET AL: "An adaptive antenna array with parallel beamformers for indoor radio channel enhancement" 1997 IEEE 47TH VEHICULAR TECHNOLOGY CONFERENCE. TECHNOLOGY IN MOTION (CAT. NO.97CH36003), 1997 IEEE 47TH VEHICULAR TECHNOLOGY CONFERENCE. TECHNOLOGY IN MOTION, PHOENIX, AZ, USA, 4-7 MAY 1997, Seiten 188-192 vol.1, XP002085777 ISBN 0-7803-3659-3, 1997, New York, NY, USA, IEEE, USA**

## Beschreibung

Die Erfindung betrifft ein Verfahren zum Kanalschätzen aus über einen Funkkanal übertragenen Empfangssignalen, das vorteilhafterweise in Mobilfunksystemen eingesetzt werden kann.

In einem Mobilfunksystem werden von einer sendenden Funkstation zu einer empfangenen Funkstation Informationen übertragen. Diese Informationen erreichen die empfangene Funkstation in Form von Empfangssignalen. Durch diverse externe Einflüsse erreichen die Empfangssignale die empfangende Funkstation über mehrere Laufwege. Die den verschiedenen Laufwegen entsprechenden Signalkomponenten treffen bei der empfangenden Funkstation in Form von Teilwellen zu aufeinanderfolgenden Zeitpunkten ein. In der empfangenden Funkstation besteht nun das Problem, diese Signalkomponenten, die zudem durch weitere Störkomponenten beeinflußt sein können, zu entzerren, die Fehler zu korrigieren und die übertragene Information zu dekodieren.

US-A-5.299.148 offenbart in diesem Zusammenhang ein Verfahren zum Schätzen der Einfallsrichtung eines empfangenen Signals sowie zur Signalwieder herstellung unter Störeinflüssen (Interferenz, Ranschen).

Zur Auswertung der Empfangssignale werden innerhalb der Empfangseinrichtung Parameter zur Berücksichtigung der Kanalbedingungen bestimmt. Diese Parameter sind z.B. aus W.Koch, "Optimum and sub-optimum detection of coded data distured by time-varying intersymbol interference", IEEE Proceedings 1990, S.1679-84 bekannte Kanalimpulsantworten, die durch Kanalkoeffizienten ausgedrückt werden. Diese in einem Kanalmodell verwendeten Kanalkoeffizienten dienen dazu, verschiedene nacheinander eintreffende Signalkomponenten eines Empfangssignals geeignet zu überlagern.

Es ist weiterhin bekannt, die aus den Empfangssignalen durch Übertragung ins Basisband und Analog/Digitalwandlung gewonnenen digitalisierten Empfangssignale, sowie die Kanalimpulsantworten einem Detektor zuzuführen, der die Empfangssignale entzerrt und die Fehlerkorrektur vornimmt. Die im Ausgang des Detektors rekonstruierten Symbole der Signale werden daraufhin in einem Dekoder, z.B. einem Viterbi-Dekoder, dekodiert.

Aus Mobilfunksystemen, siehe M.Mouly, M.-B.Pautet, "The GSM System for Mobile Communications", 49. rue Louise Bruneau, F-91120 Palaiseau, Frankreich, 1992, S.231-237, ist es bekannt, sogenannte Trainingssequenzen zu nutzen, um empfangende Funkstationen abzugleichen. Zu vorbestimmten Zeitpunkten sendet die sendende Funkstation eine Sequenz digitaler Symbole, die der empfangenden Funkstation bekannt ist, d.h. deren Daten in der empfangenden Funkstation unverzerrt vorliegen.

Aufgabe der Erfindung ist es, ein Verfahren zum Kanalschätzen anzugeben, das eine gegenüber Störern resistente, verbesserte Ermittlung von Kanalimpulsantworten ermöglicht. Die Aufgabe wird durch das Verfahren nach den Merkmalen von Patentanspruch 1 gelöst. Vorteilhafte Weiterbildungen der Erfindung sind den Unteransprüchen zu entnehmen.

Beim erfindungsgemäßen Verfahren zum Kanalschätzen aus über einen Funkkanal übertragenen Empfangssignalen ist einer Empfangseinrichtung eine Anzahl Ka Empfangssensoren zugeordnet, über die Ka den Empfangssensoren zugeordnete Empfangssignale empfangen werden. Die Empfangssignale setzen sich aus mindestens einem durch eine senderindividuelle Feinstruktur geprägten Teilnehmersignal zusammen, wobei ein k-tes Teilnehmersignal, k=1..K, durch Kd sich in ihrer Einfallsrichtung am Empfangsort unterscheidenden Teilwellen übertragen wird. In einem ersten Verfahrensschritt wird zumindest eine Einfallsrichtung einer Teilwelle eines Teilnehmersignals ausgewertet, so daß in einem zweiten Verfahrensschritt aus den Ka Empfangssignalen und der zumindest einen Einfallsrichtung richtungsselektive Kanalimpulsantworten ermittelt werden.

In vielen Anwendungen, beispielsweise in Radar-, Sonar- oder seismischen Meßsystemen mit nur einem oder wenigen Sendern oder Reflektoren , ist die Anzahl Ka der Empfangssensoren größer als die Anzahl Kd der auszuwertenden Teilwellen pro Teilnehmer, so daß nach dem erfindungsgemäßen Verfahren Ka-Kd weniger Kanalimpulsantworten bestimmt werden müssen. Damit ergibt sich auch eine Aufwandsverringerung bei der Kanalschätzung.

Zusätzlich wird durch die Konzentration auf die Einfallsrichtungen der Teilwellen der Einfluß von Störern deutlich reduziert. Die Kanalschätzung wird genauer.

Nach einer vorteilhaften Weiterbildung der Erfindung werden die richtungsselektiven Kanalimpulsantworten aus den die senderindividuellen Feinstrukturen bildenden Trainingssequenzen der Teilnehmersignale bestimmt. Enthalten die Teilnehmersignale Trainingssequenzen, die empfängerseitig bekannt sind, ist eine genauere Kanalschätzung als mit in der Empfangseinrichtung noch zu detektierenden Daten möglich. Zudem läßt sich damit das Verfahren in bestehende Mobilfunksysteme leicht implementieren.

Eine weitere vorteilhafte Ausprägung sieht vor, daß die Teilnehmersignale von mehreren Sendern oder Reflektoren bei der Empfangseinrichtung sich zu den Empfangssignalen überlagernd eintreffen, wobei diese Signale gleichzeitig in einem Frequenzkanal übertragen werden. Die Separierung der Teilnehmersignale kann dabei nach einem CDMA-Verfahren (Code Division Multiple Access) erfolgen. Durch eine richtungs- und teilnehmersignalbezogene Kanalschätzung kann damit auch in CDMA-Mobilfunksystemen die Genauigkeit der ermittelten Kanalimpulsantworten verbessert werden.

Im einfachsten Fall kann man auf Richtungsinformationen eines a-priori-Wissens zurückgreifen, die beispielsweise aus geometrisch-geographischen Überlegungen über die Standorte der Mobilstationen bzw. Basisstationen oder auch von Störquellen resultieren. Damit ist kein weiterer Berechnungsaufwand für eine Richtungsschätzung nötig.

Liegt kein ausreichendes a-priori-Wissen in der Empfangseinrichtung vor, so ist es vorteilhaft, die Einfallsrichtungen der Teilwellen und/oder von Störsignalen aus den Empfangssignalen zu bestimmen. Damit stehen ständig aktualisierte Werte zu den Einfallsrichtungen zur Verfügung. Dies ist besonders für Anwendungen in Mobilfunksystemen interessant.

Zum Bestimmen der Einfallsrichtungen der Teilwellen werden hochauflösende Richtungsschätzverfahren benutzt. Solche hochauflösenden Richtungsschätzverfahren, wie beispielsweise das MUSIC (Multiple Signal Classification) oder das ESPRIT (Estimation of Signal Parameters via Rotational Invariance Techniques) Verfahren, nutzen Kenntnisse der komplexen Strahlungscharakteristik der Empfangssensoren bzw. bestimmte geometrische Voraussetzungen für die Anordnung der Empfangssensoren, um eine genaue und mit geringem Signalverarbeitungsaufwand auskommende Richtungsschätzung vorzunehmen.

Die Resistenz gegenüber Störern wird weiter verbessert, indem zum Ermitteln der Einfallsrichtungen der Teilwellen zusätzliche Informationen über mindestens eine Einfallsrichtung und/oder eine Korrelationsmatrix von Störsignalen berücksichtigt werden.

Nach einer vorteilhaften Ausgestaltung der Erfindung werden den einzelnen Teilnehmern zugeordnete nicht richtungsselektive Kanalimpulsantworten aus den Empfangssignalen bestimmt und aus den nicht richtungsselektiven Kanalimpulsantworten die Einfallsrichtung von zumindest einer Teilwelle bestimmt wird. Die für Ka Empfangssignale ermittelten nicht richtungsselektiven Kanalimpulsantworten bilden eine gute Rohinformation für die Richtungsschätzung, da bereits Kanaleinflüsse berücksichtigt wurden. Zudem können für diese richtungsunabhängige Kanalschätzung herkömmliche Kanalschätzer verwendet werden.

Wird das erfindungsgemäße Verfahren in Mehrteilnehmersystemen verwendet, so ist es für eine spätere Auswertung erforderlich, die ermittelten Kanalimpulsantworten Sendern bzw. Reflektoren zuzuordnen. Zur Zuordnung der richtungsselektiven Kanalimpulsantworten zu Sendern bzw. Reflektoren sind die Teilnehmersignale durch individuelle Trainingssequenzen separierbar. Die Trainingssequenzen werden also nicht nur zur Kanalschätzung, sondern auch zur Teilnehmerseparierung mitverwendet. Alternativ kann zur Zuordnung der richtungsselektiven Kanalimpulsantworten zu Sendern eine Entspreizung der Teilnehmersignale mit individuellen Teilnehmerkodes durchgeführt werden, wodurch die Teilnehmersignale separierbar sind.

Zum Bestimmen der Einfallsrichtungen der Teilwellen wird nach einer weiteren Ausgestaltung der Erfindung eine Mittelung der bestimmten Werte über ein Zeitintervall durchgeführt. Innerhalb eines Zeitintervalls, das einem Vielfachen der Kohärenzzeit der Kanalimpulsantworten entsprechen kann, ändert sich die Einfallsrichtung wenig. Eine Mittelung verbessert die Richtungsschätzung, da zufällige Fehler reduziert werden. Bei einer Übertragung der Daten in Funkblöcken, kann die Mittelung für einen Funkblock oder auch eine Vielzahl von Funkblöcken durchgeführt werden. Die Anzahl der Funkblöcke für eine Mittelung, d.h. das Zeitintervall kann dabei einstellbar sein, wobei Änderungen der Einfallsrichtungen eine Änderung des Zeitintervalls hervorrufen. Ändern sich die Kanalbedingungen schnell, beispielsweise bei einer Beschleunigung der Bewegung einer Mobilstation, dann kann die Richtungsschätzung auf einen kürzeren Zeitintervall beschränkt werden.

Nach vorteilhaften Anwendungen der Erfindung werden Zusammenhänge zwischen der Bestimmung der richtungsselektiven Kanalimpulsantworten und der Datendetektion ausgenutzt.

So bestehen gemäß einer Ausgestaltung die K Teilnehmersignale aus datentragenden Abschnitten und Trainingssequenzen, wobei aus den von den Trainingssequenzen der K Teilnehmersignale herrührenden Empfangssignalen die richtungsselektiven Kanalimpulsantworten bestimmt werden und die Daten aus den von den datentragenden Abschnitten herrührenden Empfangssignalen detektiert werden.

Das Bestimmen der richtungsselektiven Kanalimpulsantworten und die Datendetektion können dabei aus Teilnehmersignalen eines Funkblocks durchgeführt werden. Damit liegt für die Datendetektion eine möglichst aktuelle Kanalschätzung vor.

Alternativ dazu kann das Bestimmen der richtungsselektiven Kanalimpulsantworten und die Datendetektion aus Teilnehmersignalen unterschiedlicher Funkblöcke durchgeführt werden. Damit kann beispielsweise eine Parallelverarbeitung zur Kanalschätzung und Datendetektion eingeleitet werden oder der Rechenaufwand zur Kanalschätzung kann dadurch verringert werden, daß letztere nur in größeren Abständen wiederholt wird.

So können die Einfallsrichtungen und/oder die richtungsselektiven Kanalimpulsantworten mit einem Nachführverfahren nach einer Periode, die länger als eine funkblockbezogene Rahmenstruktur ist, erneut bestimmt werden oder es können Informationen über die Einfallsrichtungen und/oder die richtungsselektiven Kanalimpulsantworten in der Empfangseinrichtung permanent gespeichert sein, falls diese nicht oder wenig zeitabhängig sind. Eine Aktuallisierung dieser Informationen über die Einfallsrichtungen, die richtungsselektiven Kanalimpulsantworten und/oder zu Störern können vorteilhafterweise von einem Operations- und Wartungszentrum veranlaßt werden.

Im folgenden wird der Erfindungsgegenstand anhand eines Ausführungsbeispiels bezugnehmend auf zeichnerische Darstellungen näher erläutert.

Dabei zeigen

FIG 1      ein Blockschaltbild eines Mobilfunknetzes,

FIG 2      ein Blockschaltbild einer Rahmenstruktur der Funkblöcke für die Funkschnittstelle,

FIG 3      ein Blockschaltbild einer Empfangseinrichtung mit zugeordneten Empfangssensoren,

FIG 4      ein Blockschaltbild eines richtungsselektiven Kanalschätzers, und

FIG 5      ein Blockschaltbild einer Detektionseinrichtung.

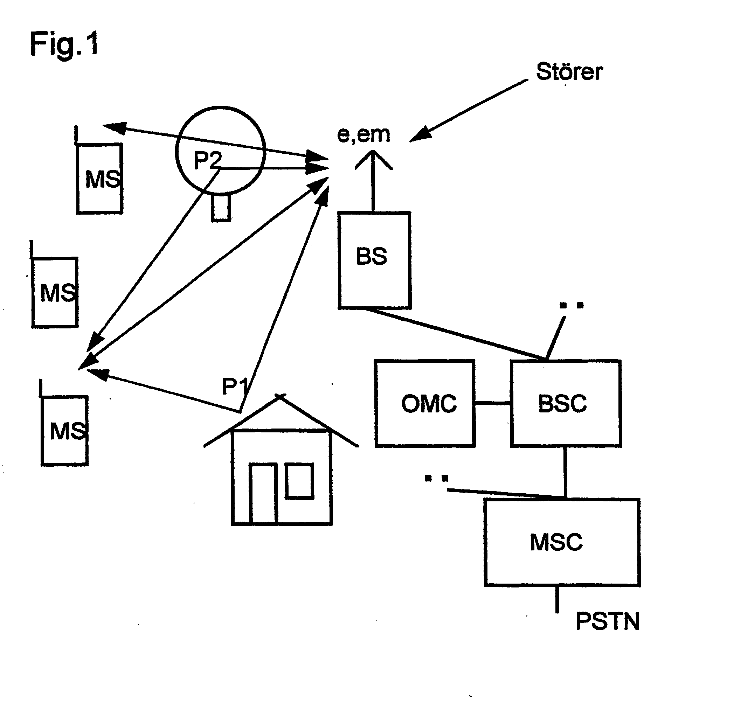

Das in FIG 1 dargestellte Mobil-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobil-Vermittlungsstellen MSC mit jeweils zumindest einem Basisstationscontroller BSC verbunden. Jeder Basisstationscontroller BSC ermöglicht wiederum eine Verbindung zu zumindest einer Basisstation BS.

Eine solche Basisstation BS ist eine Funkstation, die über eine Funkschnittstelle eine Nachrichtenverbindung zu Mobilstationen MS aufbauen kann. In FIG 1 sind beispielhaft zwei Funkverbindungen zwischen zwei Mobilstationen MS und einer Basisstation BS dargestellt, für die eine Funkverbindung sind ein Haus P1 und ein Baum P2 Reflektoren, die zu zusätzlichen Teilwellen führen. Ein Operations- und Wartungszentrum OMC realisiert Kontroll- und Wartungsfunktionen für das Mobilfunknetz bzw. für Teile davon. Diese Struktur ist auf andere Mobilfunknetze übertragbar, in denen die Erfindung zum Einsatz kommen kann.

Die Kommunikationsverbindungen zwischen der Basisstation BS und den Mobilstationen MS unterliegt einer Mehrwegeausbreitung, die durch Reflektionen beispielsweise an Gebäuden oder Bepflanzungen zusätzlich zum direkten Ausbreitungsweg hervorgerufen werden. Geht man von einer Bewegung der Mobilstationen MS aus, dann führt die Mehrwegeausbreitung zusammen mit weiteren Störungen dazu, daß bei der empfangenden Basisstation BS sich die Signalkomponenten der verschiedenen Ausbreitungswege eines Teilnehmersignals zeitabhängig überlagern. Weiterhin wird davon ausgegangen, daß sich die Teilnehmersignale verschiedener Mobilstationen MS am Empfangsort zu einem Empfangssignal e, em überlagern. Aufgabe der empfangenden Basisstation BS ist es, in den Teilnehmersignalen übertragene Daten d zu detektieren und einzelnen teilnehmerindividuellen Kommunikationsverbindungen zuzuordnen.

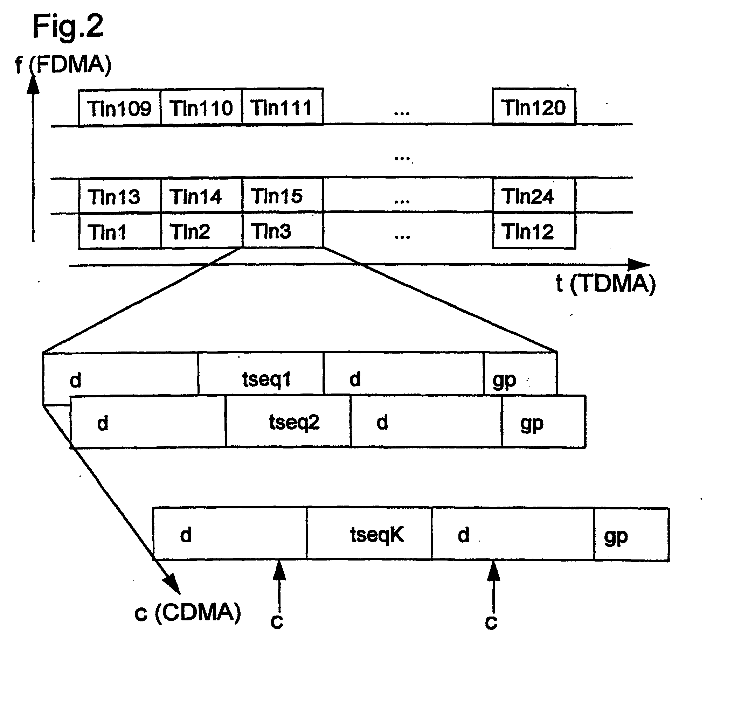

In FIG 2 ist die Übertragung der Teilnehmersignale über die Funkschnittstelle gezeigt. Die Funkschnittstelle hat dabei eine Frequenzmultiplex- (FDMA), eine Zeitmultiplex- (TDMA) und eine Kodemultiplex (CDMA) Komponente. Mehrere Frequenzbänder entlang der Frequenzachse f sind für das Mobilfunknetz vorgesehen. Weiterhin ist die Zeitachse t derart in ein Zeitraster bestehend aus mehreren Zeitschlitzen pro Zeitrahmen unterteilt, daß eine Übertragung in Funkblöcken erfolgt. Die Teilnehmersignale mehrerer Mobilstationen MS sind einer Teilnehmergruppe Tln1, Tln2 .. Tln120 zugeordnet, d.h. während des Funkblockes einer Teilnehmergruppe, beispielsweise Tln3 für die drei Mobilstationen MS der FIG 1, überlagern sich die Teilnehmersignale zu einem Empfangssignal e, em, das von einer Empfangseinrichtung in der Basisstation BS auszuwerten ist.

Innerhalb eines Funkblockes besteht ein Teilnehmersignal aus zwei datentragenden Abschnitten mit Daten d, in deren Mitte eine teilnehmerindividuelle Trainingssequenz tseq1 bis tseqK eingebracht ist. Der Funkblock wird durch eine Schutzzeit gp abgeschlossen. Die Teilnehmersignale unterscheiden sich durch einen Teilnehmerkode c, wodurch sich innerhalb der datentragenden Abschnitte durch sender- und damit teilnehmerspezifische Feinstrukturen, die durch die teilnehmerspezifischen CDMA-Kodes $c^{(k)}$, k=1..K, bestimmt sind. Durch diese im weiteren als Teilnehmerkodes bezeichneten CDMA-Kodes c, die empfangsseitig bekannt sind, ist eine Separierung der Teilnehmersignale möglich.

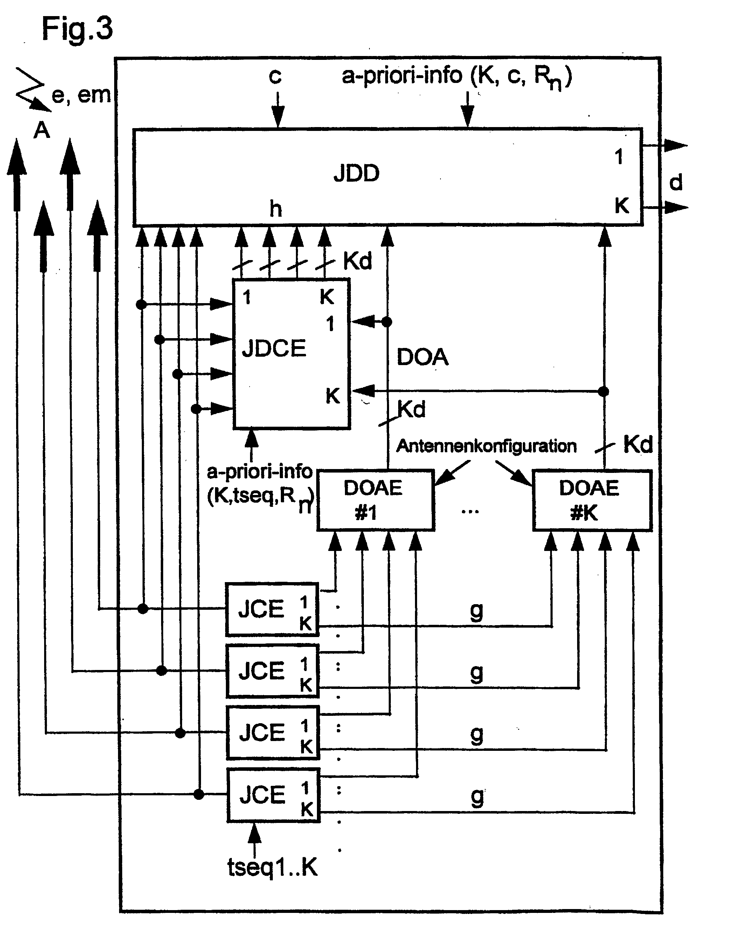

In FIG 3 ist eine Empfangseinrichtung mit zugeordneten Empfangssensoren A dargestellt. Diese Empfangseinrichtung ist Teil der Basisstation BS und empfängt von den sendenden Mobilstationen MS des Mobilfunknetzes Empfangssignale e, em. Im weiteren wird für die Basisstation BS der Empfangsfall dargestellt, nichtsdestotrotz besteht üblicherweise eine zweiseitige Kommunikationsverbindung, d.h. die Basisstation BS weist auch ein Sendeeinrichtung auf.

Die Ka=4 Empfangssensoren A bilden eine Antenneneinrichtung, die als intelligente Antenneneinrichtung ausgebildet ist, d.h. mehrere Empfangssensoren A dieser intelligenten Antenneneinrichtung empfangen zum gleichen Zeitpunkt Empfangssignale e oder em, die derartig miteinander kombiniert werden, daß die Übertragungsqualität gegenüber Systemen mit einer Empfangsantenne verbessert wird.

Aus den Empfangssignalen e, em werden z.B. durch eine Übertragung ins Basisband und darauffolgende Analog/Digitalwandlung digitale Signale erzeugt und in der Empfangseinrichtung ausgewertet.

Die Empfangseinrichtung umfaßt mehrere Kanalschätzer JCE, mehrere Richtungsschätzer DOAE, einen richtungsselektiven Kanalschätzer JDCE und eine Detektionseinrichtung JDD. Zusätzlich zu den Empfangssignalen e, em liegt in der Empfangseinrichtung ein Wissen a-priori-info über die Anzahl K der Teilnehmer, deren Trainingssequenzen tseql,..,tseqK und deren Teilnehmerkode c vor, ggf. kann auch über Informationen zu Störsignalen verfügt werden.

Den Kanalschätzern JCE werden die - bereits digitalisierten-Empfangssignale em der Empfangssensoren A zugeführt. In den Kanalschätzern JCE erfolgt eine Bestimmung der nicht richtungsselektiven Kanalimpulsantworten g durch eine Gauß-Markov- oder eine Maximum-Likelihood-Schätzung. Pro Kanalschätzer JCE wird das Empfangssignal eines Empfangssensors A ausgewertet, wobei an Ausgängen der Kanalschätzer JCE jeweils K nicht richtungsselektiven Kanalimpulsantworten g bereitgestellt werden. Die Berechnung dieser nicht richtungsselektiven Kanalimpulsantworten g erfolgt aus den Empfangssignalen $em^{(ka)}$, ka=1..Ka, die von den Trainingssequenzen tseql bis tseqK der K=3 Teilnehmersignale herrühren.

Die nicht richtungsselektiven Kanalimpulsantworten g werden jeweils den K Richtungsschätzern DOAE zugeführt, die teilnehmerbezogen eine Richtungsschätzung basierend auf diesen nicht richtungsselektiven Kanalimpulsantworten g durchführen. Die Anzahl der pro Teilnehmersignal bestimmten Einfallsrichtungen wird mit Kd bezeichnet. Diese Anzahl Kd kann sich von Teilnehmersignal zu Teilnehmersignal unterscheiden. Beim Bestimmen der Einfallsrichtungen (auch DOA Direction Of Arrival bezeichnet) kommt der ein- oder mehrdimensionale UNITARY-ESPRIT-Algorithmus zum Einsatz.

Im richtungsselektiven Kanalschätzer JDCE werden die von den Trainingssequenzen tseql bis tseqK herrührenden Empfangssignale $em^{(ka)}$ der Empfangssensoren A, und die bestimmten Einfallsrichtungen DOA der Teilwellen verarbeitet und daraus richtungsselektive Kanalimpulsantworten h bestimmt. Diese Kanalschätzung beruht auf dem Verfahren der Maximum-Likelihood-Schätzung.

Schließlich werden die Ka Empfangssignale $e^{(ka)}$, ka=1..Ka, die bestimmten richtungsselektiven Kanalimpulsantworten h und die bestimmten Einfallsrichtungen DOA der Detektionseinrichtung JDD zugeführt, die zudem die Teilnehmerkodes c und zusätzliches Wissen a-priori-info über die Einfallsrichtung von Störsignalen in Form von $R_n$ oder die geographische Position von Mobilstationen MS in Bezug auf die Basisstation BS verarbeitet.

In dieser Detektionseinrichtung JDD findet basierend auf den Empfangssignalen $e^{(ka)}$, die von den datentragenden Abschnitten herrühren, die Detektion der Daten d statt. Dazu wird ein Zero-Forcing-Verfahren angewendet. Alternative vorteilhafte Verfahren sind die Maximum-Likelihood-Schätzung oder ein MMSE-Verfahren. Im Ergebnis der Datendetektion werden die detektierten Daten d der K Teilnehmersignale für einen Funkblock an Ausgänge der Detektionseinrichtung JDD gelegt.

Bei einer verfahrensgemäßen Betrachtung der Datendetektion wird in einem ersten Verfahrensschritt eine Kanalschätzung von Kanalimpulsantworten g ohne Berücksichtigung von Richtungsinhomogenitäten durchgeführt. In einem zweiten Schritt werden aus den bestimmten Kanalimpulsantworten g die Einfallsrichtungen DOA von einer oder mehreren Teilwellen bestimmt, worauf in einem dritten Schritt aus den Empfangssignalen unter Berücksichtigung der Einfallsrichtungen DOA richtungsselektive, d.h. unterschiedlichen Einfallsrichtungen zuordenbare, Kanalimpulsantworten h bestimmt werden. Dieser Schritt beruht auf der Erkenntnis, daß jede vom herkömmlichen, nicht richtungsselektiven Kanalimpulsantworten $g^{(k)(ka)}$ durch Überlagerung von Kd richtungsselektiven Kanalimpulsantworten $h^{(k)(ka)}$, mit k=1..K und ka=1..Ka zustande kommt.

Es gilt also:

$$g^{(k)(ka)} = \sum_{kd=1}^{Kd} a^{(k)(ka)(kd)} \cdot h^{(k)(kd)}, \text{ mit } k=1..K \text{ und } ka=1..Ka. \qquad (1)$$

Dabei sind $a^{(k)(ka)(kd)}$ komplexe Bewertungsfaktoren zur Überlagerung der richtungsselektiven Kanalimpulsantworten $h^{(k)(ka)}$ zu den nicht richtungsselektiven Kanalimpulsantworten $g^{(k)(ka)}$. Zum Bestimmen der richtungsselektiven Kanalimpulsantworten h können ggf. auch Kenntnisse über Einfallsrichtungen oder Korrelationsmatrizen von störenden Teilwellen ausgenutzt werden.

Die Anzahl **W·K·Ka** der insgesamt zu schätzenden Parameter in $g^{(k)(ka)}$, k=1..K, ka=1..Ka, ist üblicherweise bei Mehrantennensystemen wesentlich größer als die Anzahl **W·K·Kd** der insgesamt zu schätzenden Parameter in $h^{(k)(kd)}$, k=1..K, kd=1..Kd, da Ka > Kd. Damit kann der Rechenaufwand beim Schätzen der Parameter nach dem erfindungsgemäßen Verfahren verringert werden.

Während des Empfangs eines kombinierten Empfangssignals em, das vorteilhafterweise von den Trainingssequenzen der Teilnehmersignale herrührt und die Empfangssignale $em^{(ka)}$, ka=1.. Ka der Ka Empfangssensoren enthält, hat dieses Empfangssignal em die Form:

$$em = G \cdot h + n_m \tag{2}$$

mit G als bekannter Matrix (L*Ka)x(W*K*Kd), wobei L die Anzahl der zeitdiskreten Abtastwerte des Empfangssignals em und W die Länge der Kanalimpulsantworten bezeichnet. Diese Matrix G ist durch die geometrische Anordnung und die komplexen Charakteristiken der Ka Empfangssensoren, durch die gesendeten Trainingssequenzen und die Kd Einfallsrichtungen DOA gegeben. Der Vektor h enthält das zeitdiskrete Basisbandäquivalent der K*Kd richtungsselektiven Kanalimpulsantworten $h^{(K)(Kd)}$. $n_m$ bezeichnet einen unbekannten (L*Ka) Spaltenvektor eines zeitdiskreten Störsignals.

Aus Gleichung (1) sind G und em bekannt, so daß die richtungsselektiven Kanalimpulsantworten h bestimmt werden können.

Während der datentragenden Abschnitte hat das kombinierte Empfangssignal e der Empfangssignale e[(ka)] der Empfangssensoren die Form:

$$e = A \cdot d + n. \tag{3}$$

Wobei A eine (M*Ka)x(N*K) Matrix, wobei M die Anzahl der diskreten Abtastzeitpunkte des Empfangssignals und N die Anzahl der übertragenen Datensymbole pro Teilnehmer bezeichnet. n ist wiederum ein unbekannter (M*Ka) Spaltenvektor eines zeitdiskreten Störsignals.

In Gleichung (3) sind A - durch die K*Kd Einfallsrichtungen, die richtungsselektiven Kanalimpulsantworten h, die geometrische Anordnung und komplexe Charakteristiken der Empfangssensoren und beim Verwenden von einer CDMA-Teilnehmerseparierung durch die benutzten Teilnehmerkode - und e bekannt, so daß die Daten d detektiert werden können.

In einem vierten Verfahrensschritt werden aus von den datentragenden Abschnitten der K Teilnehmersignale herrührenden Empfangssignalen e unter Verwendung der zuvor bestimmten Einfallsrichtungen DOA und der richtungsselektiven Kanalimpulsantworten h die Daten d detektiert. Bei diesem Schritt können ggf. auch Kenntnisse über Einfallsrichtungen, die Leistung, das Spektrum oder die Kovarianzmatrix von Störsignalen ausgenutzt werden.

Die Bestimmung der richtungsselektiven Kanalimpulsantworten h erfolgt vorteilhafterweise nach dem Verfahren der Gauß-Markov -Schätzung, wobei ein Schätzwert h für die richtungsselektive Kanalimpulsantworten h aus:

$$\hat{h} = (G^{*T} \cdot \tilde{R}_n^{-1} G)^{-1} \cdot G^{*T} \cdot \tilde{R}_n^{-1} \cdot em \tag{4}$$

berechnet werden kann. $\tilde{R}_n$ bezeichnet die Kovarianzmatrix des Störsignals $n_m$, welche durch die Einfallsrichtungen und relativen Leistungen der störenden Teilwellen, die Spektren der Störsignale, sowie durch die geometrische Anordnung und komplexe Strahlungscharakteristik der Empfangssensoren bestimmt ist. Dieses Verfahren entspricht der Maximum-Likelihood-Schätzung der richtungsselektiven Kanalimpulsantworten h und kann durch rekursives Auflösen von (4) aufwandsgünstig realisiert werden.

Zusammenhänge zwischen der Richtungsschätzung bzw. der Bestimmung der richtungsselektiven Kanalimpulsantworten und der Datendetektion werden wie folgt ausgenutzt. Die K Teilnehmersignale bestehen aus datentragenden Abschnitten und Trainingssequenzen, wobei aus den von den Trainingssequenzen der K Teilnehmersignale herrührenden Empfangssignalen die richtungsselektiven Kanalimpulsantworten bestimmt werden und die Daten aus den von den datentragenden Abschnitten herrührenden Empfangssignalen detektiert werden.

Auch können zur Aufwandsverringerung die Einfallsrichtungen DOA und/oder die richtungsselektiven Kanalimpulsantworten h mit einem Nachführverfahren nach eine Periode, die länger als eine funkblockbezogene Rahmenstruktur ist, erneut bestimmt werden.

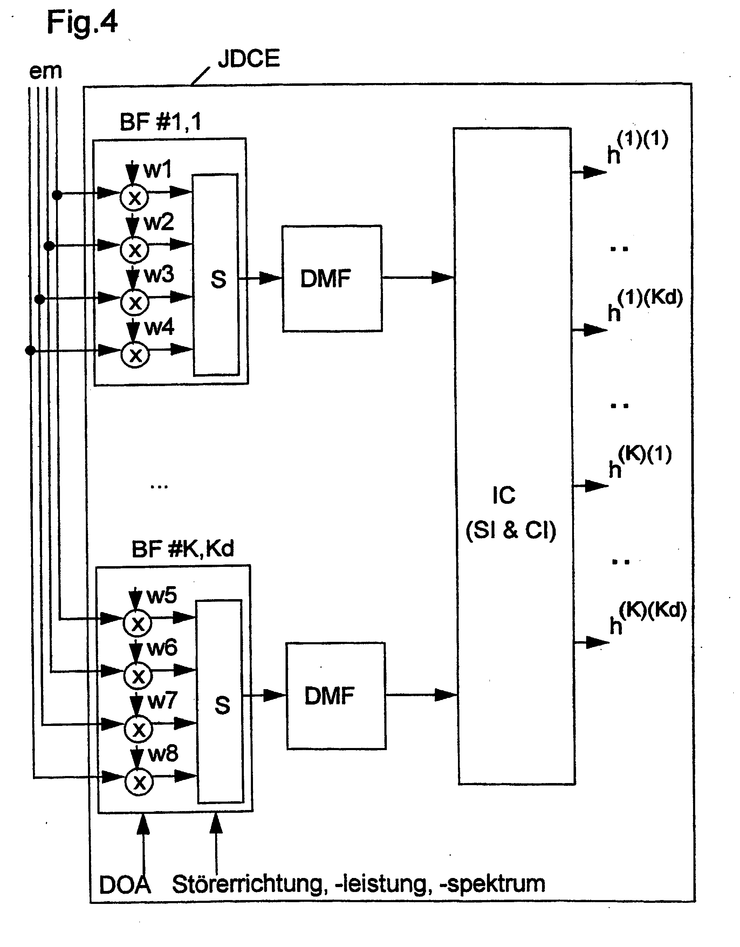

FIG 4 zeigt einen richtungsselektiven Kanalschätzer JDCE, der Strahlformer BF enthält, die für die Ka Empfangssignale em[(ka)] jeweils eine Gewichtung durch strahlformerindividuelle Wichtungsfaktoren w1 bis w4 bzw. w5 bis w8 und ein Aufsummieren der Signalkomponenten in einer Summiereinrichtung S zu einem Signal, für das das Signal-Rausch-Verhältnis maximiert wird, vornehmen, wobei dieses Signal anschließend einem dekorrelierenden signalangepaßten Filter DMF zugeführt wird. In einer Einrichtung IC zur Interferenzauslöschung werden die Eigen- SI und Kreuzinterferenzen CI ausgeglichen und richtungsselektive Kanalimpulsantworten h gewonnen.

In den Strahlformern BF werden zusätzlich die Informationen über die Einfallsrichtungen DOA der Teilwellen und die Richtungen und relativen Leistungen der störenden Teilwellen verarbeitet. Diese Richtungen beeinflussen die Wichtungsfaktoren w1 bis w4 bzw. w5 bis w8 für jeden Strahlformer BF individuell. Die Strahlformer BF und die dekorrelierenden signalangepaßten Filter DMF wirken wie ein räumlich auflösendes dekorrelierendes signalangepaßtes Filter, die jeweils auf eine Teilwelle - somit K*Kd - angewandt werden.

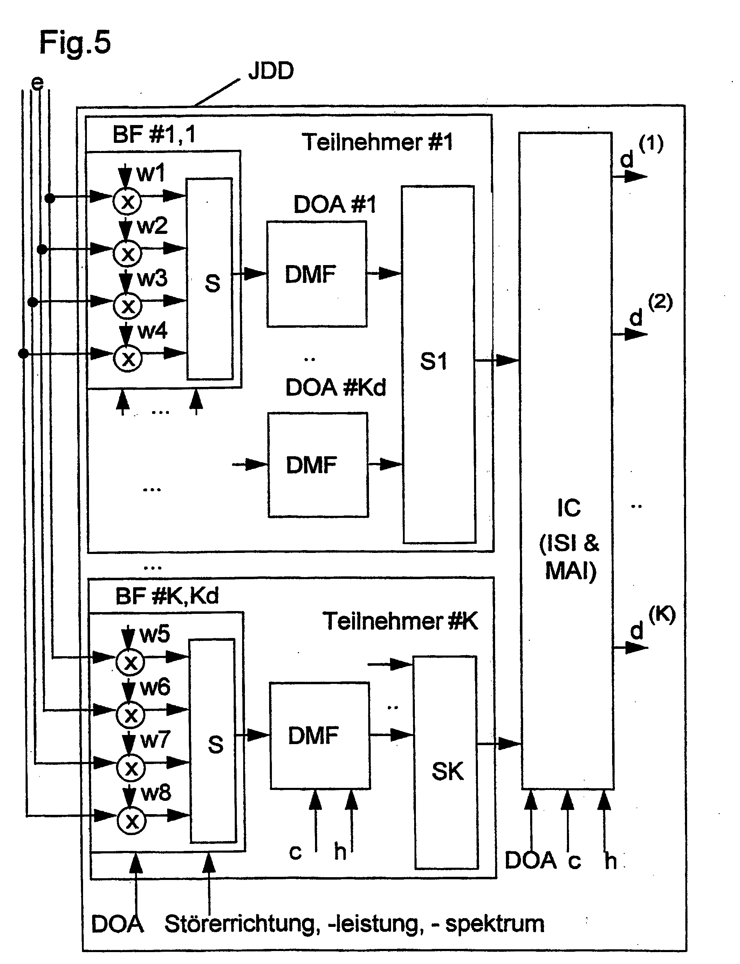

In FIG 5 wird die Detektionseinrichtung JDD gezeigt. Diese Detektionseinrichtung JDD verarbeitet die datentragenden Abschnitte der Empfangssignale e, wobei entsprechend der geschilderten Vorgehensweise beim richtungsselektiven Kanalschätzer JDCE ein räumlich auflösendes dekorrelierendes signalangepaßtes Filter die K*Kd Teilwellen der Empfangssignale e zum Maximieren des Signal-Rausch-Verhältnisses überlagert. Diese Maximierung des Signal-Rausch-Verhältnisses wird für jede Einfallsrichtung DOA eines jeden Teilnehmersignals durchgeführt, wobei die Kd Signalkomponenten der einzelnen Teilwellen eines Teilnehmersignals nach dem Maximum-Ratio-Combining-Verfahren in Summiereinrichtungen SI bis SK überlagert werden.

Die Teilnehmersignale werden anschließend einer Einrichtung IC zur Interferenzauslöschung zugeführt, die die Intersymbol-ISI und Mehrfachzugriff- (Multiple Access) Interferenzen MAI ausgleicht. Dabei werden auch die Informationen über die Teilnehmerkodes c, die Einfallsrichtungen DOA, die richtungsselektiven Kanalimpulsantworten h und ggf. a-priori-Wissen über die Störer in Form von $R_n$ verarbeitet. An einem Ausgang der Einrichtung IC zur Interferenzauslöschung liegen die detektierten Daten d der Teilnehmersignale separiert vor. Bei der Interferenzauslöschung kommt ein sogenanntes JD (Joint Detection) Verfahren zum Einsatz.

Durch die erfindungsgemäße Empfangseinrichtung wird die zeitliche Dispersion und Varianz der Empfangssignale verringert. Weiterhin können durch die räumliche Auflösung eine größere Anzahl von Mobilstationen MS in einem Funkbereich einer Basisstation BS versorgt werden bzw. der Funkbereich kann durch die Richtwirkung derart gestaltet werden, daß auch die Sendeleistungen der Mobilstationen MS deutlich verringert werden.

**Patentansprüche**

1. Verfahren zum Kanalschätzen aus über einen Funkkanal übertragenen Empfangssignalen, bei dem

   - Empfangssensoren einer Empfangseinrichtung Ka Empfangssignale empfangen, die sich aus mindestens einem durch eine senderindividuelle Feinstruktur geprägten Teilnehmersignal zusammensetzen, wobei ein k-tes Teilnehmersignal, k=1..K, durch Kd sich in ihrer Einfallsrichtung (DOA) am Empfangsort unterscheidenden Teilwellen übertragen wird,
   - zumindest eine Einfallsrichtung (DOA) einer Teilwelle eines Teilnehmersignals in der Empfangseinrichtung verfügbar ist,
   - richtungsselektive Kanalimpulsantworten (h) aus den Ka Empfangssignalen und der Einfallsrichtung (DOA) ermittelt werden.

2. Verfahren nach Anspruch 1, bei dem
   die richtungsselektiven Kanalimpulsantworten (h) aus die senderindividuellen Feinstrukturen bildenden Trainingssequenzen (tseq1, tseq2, ... tseqK) der Teilnehmersignale bestimmt werden.

3. Verfahren nach Anspruch 1 oder 2, bei dem Teilnehmersignale von mehreren Sendern (MS) oder Reflektoren (P1, P2) sich bei der Empfangseinrichtung zu den Empfangssignalen überlagernd eintreffen, wobei diese Signale gleichzeitig in einem Frequenzkanal übertragen werden.

4. Verfahren nach einem der vorhergehenden Ansprüche, bei dem die Einfallsrichtungen (DOA) der Teilwellen und/ oder von Störsignalen (DOA) in der Empfangseinrichtung als a-priori-Wissen vorliegen.

5. Verfahren nach einem der Ansprüche 1 bis 3, bei dem die Einfallsrichtungen (DOA) der Teilwellen und/oder von Störsignalen (DOA) aus den Empfangssignalen bestimmt werden.

6. Verfahren nach Anspruch 5, bei dem
   zum Ermitteln der Einfallsrichtungen (DOA) der Teilwellen zusätzliche Informationen über mindestens eine Einfallsrichtung (DOA) und/oder eine Korrelationsmatrix von Störsignalen berücksichtigt werden.

7. Verfahren nach Anspruch 5, bei dem
   nicht richtungsselektive Kanalimpulsantworten (g) aus den Empfangssignalen bestimmt werden, und
   aus den nicht richtungsselektiven Kanalimpulsantworten (g) die Einfallsrichtung (DOA) von zumindest einer Teilwelle bestimmt wird.

**8.** Verfahren einem der vorhergehenden Ansprüche, bei dem zur Zuordnung der richtungsselektiven Kanalimpulsantworten (h) zu Sendern (MS) bzw. Reflektoren (P1, P2) die Teilnehmersignale durch individuelle Trainingssequenzen (tseq1, tseq2, ... tseqK) separierbar sind.

**9.** Verfahren einem der vorhergehenden Ansprüche, bei dem zur Zuordnung der richtungsselektiven Kanalimpulsantworten (h) zu Sendern (MS) die Teilnehmersignale durch eine Entspreizung mit individuellen Teilnehmerkodes (tc1, tc2, .. tcK) separierbar sind.

**10.** Verfahren nach einem der Ansprüche 4 oder 5, bei dem zum Bestimmen der Einfallsrichtungen (DOA) der Teilwellen eine Mittelung der bestimmten Werte über ein Zeitintervall erfolgt.


**Claims**

**1.** Method for channel assessment from received signals transmitted via a radio channel, in the case of which method

- receiving sensors of the receiving device receive Ka received signals which are composed of at least one subscriber signal marked by a transmitter-specific fine structure, a kth transmitter signal, k=1..K, being transmitted by Kd component waves differing in their direction of arrival (DOA) at the reception location,
- at least one direction of arrival (DOA) of a component wave of a subscriber signal being available in the receiving device, and
- directionally selective channel pulse responses (h) are determined from the Ka received signals and the direction of arrival (DOA).

**2.** Method according to Claim 1, in which the directionally selective channel pulse responses (h) are determined from training sequences (tseq1, tseq2, ... tseqK), forming the transmitter-specific fine structures, of the subscriber signals.

**3.** Method according to Claim 1 or 2, in which subscriber signals from a plurality of transmitters (MS) or reflectors (P1, P2) arrive in a fashion superimposed on the received signals at the receiving device, these signals being transmitted simultaneously in one frequency channel.

**4.** Method according to one of the preceding claims, in which the directions of arrival (DOA) of the component waves and/or of interfering signals are present as a-priori knowledge in the receiving device.

**5.** Method according to one of the Claims 1 to 3, in which the directions of arrival (DOA) of the component waves and/or interfering signals are determined from the received signals.

**6.** Method according to Claim 5, in which additional information about at least one direction of arrival (DOA) and/or a correlation matrix of interfering signals are/is taken into account for determining the directions of arrival (DOA) of the component wave.

**7.** Method according to Claim 5, in which non-directionally selective channel pulse responses (g) are determined from the received signals, and the direction of arrival (DOA) of at least one component wave is determined from the not directionally selective channel pulse responses (g).

**8.** Method according to one of the preceding claims, in which the subscriber signals can be separated by individual training sequences (tseq1, tseq2, ... tseqK) in order to assign the directionally selective channel pulse responses (h) to transmitters (MS) or reflectors (P1, P2).

**9.** Method according to one of the preceding claims, in which the subscriber signals can be separated by despreading with individual subscriber codes (tc1, tc2, .. tcK) in order to assign the directionally selective channel pulse responses (h) to transmitters (MS).

**10.** Method according to one of Claims 4 or 5, in which averaging of the specific values is performed over a time interval in order to determine the directions of arrival (DOA) of the component waves.

**EP 1 013 003 B1**

**Revendications**

1. Procédé d'évaluation de canal à partir de signaux de réception transmis via un canal radio, dans lequel

   - des capteurs de réception d'un dispositif de réception Ka reçoivent des signaux de réception qui sont composés d'au moins un signal d'abonné marqué par une structure fine individuelle pour chaque émetteur, un k-ième signal d'abonné, k = 1 ... K, étant transmis par Kd ondes partielles qui se distinguent par leur angle d'incidence (DOA) au lieu de réception,
   - au moins un angle d'incidence (DOA) d'une onde partielle d'un signal d'abonné est disponible dans le dispositif de réception,
   - des réponses impulsionnelles de canal (h) à sens sélectif sont déterminées à partir des Ka signaux de réception et de l'angle d'incidence (DOA).

2. Procédé selon la revendication 1, dans lequel les réponses impulsionnelles de canal (h) à sens sélectif sont déterminées à partir de séquences d'apprentissage (tseq1, tseq2, ..., tseqK) des signaux d'abonnés qui forment les structures fines individuelles pour chaque émetteur.

3. Procédé selon la revendication 1 ou 2, dans lequel des signaux d'abonnés de plusieurs émetteurs (MS) ou réflecteurs (P1, P2) arrivent en se superposant aux signaux de réception au niveau du dispositif de réception, ces signaux étant transmis simultanément dans un canal de fréquences.

4. Procédé selon l'une quelconque des revendications précédentes, dans lequel les angles d'incidence (DOA) des ondes partielles et/ou de signaux parasites (DOA) sont présents dans le dispositif de réception en tant que connaissance à priori.

5. Procédé selon l'une des revendications 1 à 3, dans lequel les angles d'incidence (DOA) des ondes partielles et/ou de signaux parasites (DOA) sont déterminés à partir des signaux de réception.

6. Procédé selon la revendication 5, dans lequel, pour déterminer les angles d'incidence (DOA) des ondes partielles, on prend en compte des informations supplémentaires sur au moins un angle d'incidence (DOA) et/ou une matrice de corrélation de signaux parasites.

7. Procédé selon la revendication 5, dans lequel des réponses impulsionnelles de canal (g) à sens non sélectif sont déterminées à partir des signaux de réception et l'angle d'incidence (DOA) d'au moins une onde partielle est déterminé à partir des réponses impulsionnelles de canal (g) à sens non sélectif.

8. Procédé selon l'une quelconque des revendications précédentes, dans lequel, pour attribuer les réponses impulsionnelles de canal (h) à sens sélectif aux émetteurs (MS) resp. réflecteurs (P1, P2), les signaux d'abonnés peuvent être séparés par des séquences d'apprentissage individuelles (tseq1, tseq2, ..., tseqK).

9. Procédé selon l'une quelconque des revendications précédentes, dans lequel, pour attribuer les réponses impulsionnelles de canal (h) à sens sélectif aux émetteurs (MS), les signaux d'abonnés peuvent être séparés par un désétalement avec des codes d'abonnés individuels (tc1, tc2, ..., tcK).

10. Procédé selon l'une des revendications 4 ou 5, dans lequel, pour déterminer les angles d'incidence (DOA) des ondes partielles, on calcule, sur un intervalle de temps, la moyenne des valeurs déterminées.

# Fig.1

Störer

MS

P2

MS

e,em

BS

MS

P1

OMC

BSC

MSC

PSTN

## Fig.2

f (FDMA)

| TIn109 | TIn110 | TIn111 | ... | TIn120 |

...

| TIn13 | TIn14 | TIn15 | ... | TIn24 |
| TIn1 | TIn2 | TIn3 | ... | TIn12 |

t (TDMA)

| d | tseq1 | d | gp |

| d | tseq2 | d | gp |

| d | tseqK | d | gp |

c (CDMA)    c              c

Fig.3

e, em

A

a-priori-info (K, c, $R_n$)

c

JDD

h

1

K

d

Kd

JDCE

1

K

1

K

DOA

Kd

a-priori-info (K,tseq,$R_n$)

Antennenkonfiguration

Kd

DOAE #1

...

DOAE #K

JCE

1

K

g

JCE

1

K

g

JCE

1

K

g

JCE

1

K

g

tseq1..K

# Fig.4

## Fig.5